# EUROPEAN PATENT APPLICATION

(11) **EP 3 364 006 A1**
(43) Date of publication of application: **22.08.2018**
(21) Application number: 18152167.5
(22) Date of filing: 17.01.2018
(51) Int. Cl.: F01N 3/20, F01N 13/00

(54) **EXHAUST GAS PURIFICATION DEVICE**

(30) Priority: 16.02.2017 JP 2017027000
(71) Applicant: Mitsubishi Jidosha Kogyo Kabushiki Kaisha, Tokyo 108-8410 (JP)
(72) Inventor: Kawashima, Kazuhito, Tokyo, 108-8410 (JP); Anoda, Hiroshi, Tokyo, 108-8410 (JP); Kato, Ryoji, Tokyo, 108-8410 (JP); Takahashi, Masashi, Tokyo, 108-8410 (JP); Sato, Daisuke, Tokyo, 108-8410 (JP)
(74) Representative: Vossius & Partner Patentanwälte Rechtsanwälte mbB

(57) **Abstract**

To suppress reduction of nitrogen oxide purification performance and an increase in the consumption amount of a reductant under a high temperature, an exhaust gas purification device for an engine includes: a first reduction catalyst part (11) and a second reductant catalyst part (12) for purifying nitrogen oxide in exhaust gas with the reductant or a substance produced from the reductant; a first injector (20) disposed on the upstream side of the first reduction catalyst part (11); a second injector (22) disposed between the first reduction catalyst part (11) and the second reduction catalyst part (12); and a reductant injection control unit (42) configured to control injection of the reductant by the first injector (20) and the second injector (22) on the basis of the temperature of the first reduction catalyst part (11) and the temperature of the second reduction catalyst part (12).

## Description

### TECHNICAL FIELD

The present disclosure relates to an exhaust gas purification device for an engine, which purifies exhaust gas discharged from the engine.

### BACKGROUND

Generally, as an exhaust gas purification device for a diesel engine or the like, a diesel oxidation catalyst and a diesel particulate matter filter are used, for instance, in order to purify diesel exhaust particulate matters (PM) and nitrogen oxide (NOx) contained in exhaust gas.

Furthermore, there is a system using a NOx trap catalyst or a selective catalytic reduction device, for instance, in order to purify nitrogen oxide (NOx) contained in lean exhaust gas.

A urea selective catalytic reduction device injects urea solution, which serves as a reductant, into exhaust gas through a reductant injector disposed upstream a reduction catalyst body, thereby utilizing thermal decomposition of the urea into ammonia (NH₃) by heat of exhaust gas. The produced ammonia reacts with nitrogen oxide in exhaust gas in the vicinity of the reduction catalyst body, and turns into nitrogen gas (N₂) and water (H₂O). Accordingly, nitrogen oxide in the exhaust gas is purified.

For instance, in Patent Document 1 (JP2012-122469A), a diesel oxidation catalyst device and a diesel particulate matter filter are disposed in series along the gas flow direction of an exhaust passage, and a reductant injector and a reduction catalyst body of a urea selection catalytic reduction device are disposed in series on the downstream side of the diesel particulate matter filter.

### SUMMARY

Generally, a urea selection catalytic reduction device has an excellent purification property of purifying nitrogen oxide in a high temperature region compared to a nitrogen oxide trap catalyst device, but its purification performance tends to deteriorate in a low temperature region. Thus, in recent years, a urea selective catalytic reduction device is often located at a position more proximate to the engine to ensure a high reaction temperature.

Meanwhile, when the urea selective catalytic reduction device is exposed to an excessively high temperature due to high-load operation or the like, ammonia that should originally function as a reductant for nitrogen oxide may react with oxygen (O₂) before nitrogen oxide. In this case, under a condition such that the supply amount of urea as a reductant is the same, the nitrogen oxide purification performance decreases. Thus, to maintain the nitrogen oxide purification performance at the same level, it is necessary to increase the urea consumption amount.

In particular, a urea selective catalytic reduction device disposed proximate to an engine is likely to reach a high temperature during high-load operation of a vehicle, and the above problems are likely to occur.

Thus, an object of at least one embodiment of the present invention is to suppress the nitrogen oxide purification performance, or an increase in the consumption amount of a reductant, under a high temperature.

To solve the above problem, an exhaust gas purification device for an engine according to at least one embodiment of the present invention comprises: an exhaust passage extending from a combustion chamber of an engine; reductant injectors configured to inject a reductant into the exhaust passage; a first reduction catalyst part and a second reductant catalyst part disposed in the exhaust passage and including a selective reduction catalyst, so as to purify nitrogen oxide in the exhaust gas with the reductant or a substance produced from the reductant, the second reduction catalyst part being disposed downstream the first reduction catalyst part; a first temperature obtaining unit for obtaining a temperature of the first reduction catalyst part; and a second temperature obtaining unit for obtaining a temperature of the second reduction catalyst part. The reductant injector includes a first injector disposed upstream the first reduction catalyst part and a second injector disposed between the first reduction catalyst part and the second reduction catalyst part. The exhaust gas purification device further includes a reductant injection control unit configured to control injection of the reductant by the first injector and the second injector on the basis of the temperature of the first reduction catalyst part and the temperature of the second reduction catalyst part.

With the above configuration, on the basis of the temperature of the first reduction catalyst part disposed upstream and the temperature of the second reduction catalyst part disposed downstream, injection of the reductant by the first injector corresponding to the first reduction catalyst part and injection of the reductant by the second injector corresponding to the second reduction catalyst part are controlled individually. Thus, it is possible to control two catalyst parts under different temperature conditions in accordance with the respective temperatures, and to suppress deterioration of the nitrogen oxide purification performance or an increase in the consumption amount of the reductant under a high temperature.

### BRIEF DESCRIPTION OF DRAWINGS

FIG. 1 is a schematic diagram of an exhaust gas purification device of an engine according to an embodiment of the present invention.
FIG. 2 is a graph showing the temperature characteristics of a selective catalytic reduction device.
FIG. 3 is a graph showing a control of the present invention.

### DETAILED DESCRIPTION

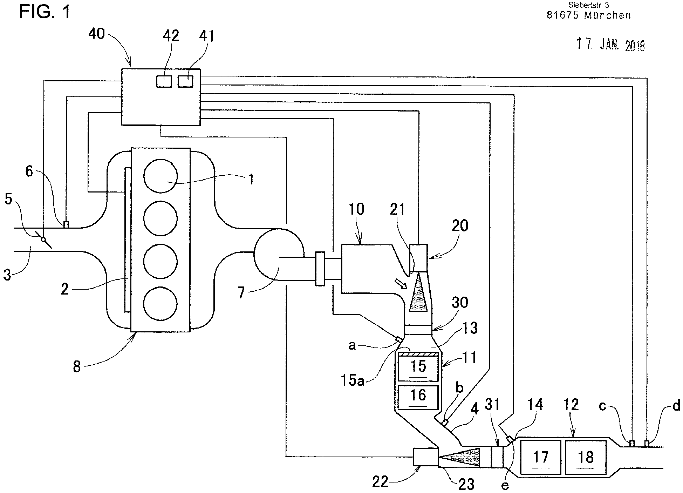

Hereinafter, an embodiment of the present invention will be described with reference to the drawings. FIG. 1 is a schematic diagram showing a conceptual configuration of an exhaust gas purification device of an engine according to the present embodiment.

As shown in FIG. an intake passage 3 and an exhaust passage 4 are connected to a combustion chamber 1 of an engine 8. The combustion chamber 1 is supplied with air through the intake passage 3. Furthermore, fuel is injected into the combustion chamber 1 by a fuel injection device 2. Exhaust gas from the combustion chamber 1 is sent out through the exhaust passage 4 extending from the combustion chamber 1, passes through various exhaust gas purification parts for removing harmful substances, and then is discharged to atmosphere.

In the intake passage 3 connecting to the combustion chamber 1, an air cleaner, a throttle valve 5 for changing the passage cross-sectional area to control the flow-rate of intake air, an air flow sensor 6 for detecting the intake air amount, and the like, are disposed in series from upstream toward downstream.

In the exhaust passage 4, a turbine 7 of a mechanical supercharger, a diesel oxidation catalyst device 10, a first injector (reductant injector) 20 for injecting a reductant into exhaust gas, a first mixer 30 for spreading the reductant in the exhaust gas to homogenize the reductant, a first catalyst body 13 for purifying nitrogen oxide in exhaust gas with a reductant or a substance produced from a reductant, a second injector (reductant injector) for injecting a reductant into exhaust gas, a second mixer 31 for spreading the reductant in exhaust gas to homogenize the reductant, a second catalyst body 14 for purifying nitrogen oxide in exhaust gas with a reductant or a substance produced from a reductant, a muffler serving as a noise canceling device, and the like, are disposed in series from upstream toward downstream.

The diesel oxidation catalyst device 10 has a space inside, which has a greater cross section than the exhaust passage 4 in front and rear thereof. Inside the space, a honeycomb-structure member is housed as a carrier. The carrier includes an assembly of a number of cells through which exhaust gas can pass. The material of the carrier 12 is, for instance, crystalline ceramics, which has a small thermal expansion coefficient and a high resistance against thermal shock. A surface of the carrier supports metal for exerting the function of a catalyst. Accordingly, it is possible to purify harmful substances such as carbon monoxide and carbon hydride contained in passing exhaust gas into harmless substances such as water and carbon dioxide.

The first injector 20, the first mixer 30, the first catalyst body 13, and the like, constitute a first reduction catalyst part 11 that serves as an upstream exhaust gas purification part close to the engine 8. In this embodiment, the first reduction catalyst part 11 is a proximate catalyst disposed under an environment that is often exposed to relatively high-temperature exhaust gas, with the diesel oxidation catalyst device 10.

The first reduction catalyst part 11 includes an upstream arrangement part 15 including a urea selective catalyst part 15a including a diesel particulate matter filter with a function of a urea selective catalytic reduction device applied thereto, and a downstream arrangement part 16 that functions as a urea selective catalytic reduction device. In the casing of the first catalyst body 13, the upstream arrangement part 15 is disposed upstream, and the downstream arrangement part 16 is disposed downstream. The upstream arrangement part 15 and the downstream arrangement part 16 are arranged in series.

Furthermore, the second injector 22, the second mixer 31, the second catalyst body 14, and the like, constitute a second reduction catalyst part 12 that serves as a downstream exhaust gas purification part remote from the engine 8. In this embodiment, the second reduction catalyst part 12 is an underfloor catalyst disposed under an environment that is less often exposed to relatively high-temperature exhaust gas.

The second reduction catalyst part 12 includes an upstream part 17 that functions a urea selective catalyst part, and a downstream part 18 that also functions as a urea selective catalytic reduction device. In the casing of the second catalyst body 13, the upstream part 17 is disposed upstream, and the downstream part 18 is disposed downstream. The upstream part 17 and the downstream part 18 are arranged in series.

As described above, the reductant injector includes a first injector 20 disposed upstream the first reduction catalyst part 11, and a second injector 22 disposed between the first reduction catalyst part 11 and the second reduction catalyst part 12. The first injector 20 and the second injector 22 each inject a reductant into the exhaust passage 4. Herein, urea (CO (NH₂)₂) is used as a reductant.

The reductant injection directions by the first injector 20 and the second injector 22 are directed downstream along the flow direction of exhaust gas in the exhaust passage 4, as shown in FIG. 1. Herein, the first injector 20 and the second injector 22 are disposed in the outer region of the curved portion of the exhaust passage 4, such that the reductant injection direction and the flow direction of exhaust gas are the same.

Furthermore, the first injector 20 and the second injector 22 are each disposed inside an offset hole 21 having a recessed shape and having an opening into the exhaust passage 4. Thus, the injection nozzle of each of the first injector 20 and the second injector 22 is disposed slightly further back from the inner wall surface of the exhaust passage 4. Accordingly, it is possible to ensure a long injection distance from the first mixer 30 and the second mixer 31, which are targets of injection from the nozzles, as well as to protect the reductant injectors 20 from heat of exhaust gas. Furthermore, the first injector 20 and the second injector 22 do not obstruct the flow of exhaust gas.

Inside the first catalyst body 13, the second catalyst body 14, and in the vicinity thereof, thanks to their catalytic function, ammonia produced from urea and nitrogen oxide contained in exhaust gas react, and thereby nitrogen gas and water are produced. Accordingly, exhaust gas is purified before being released to the atmosphere.

Herein, the first mixer 30 and the second mixer 31 are provided between the first injector 20 and the first catalyst body 13, and between the second injector 22 and the second catalyst body 14, respectively. Thus, spreading and homogenization of urea, which is a reductant, are further promoted. Thus, smooth production of ammonia and reaction between ammonia and nitrogen oxide are achieved.

For instance, as the first mixer 30 and the second mixer 31, it is possible to provide an annular protruding piece that protrudes toward the radially inner side from the entire periphery of the inner surface of the exhaust passage 4. The inward protruding length of the protruding piece may be adjusted in accordance with the flow rate of exhaust gas that passes through the exhaust passage 4.

Furthermore, while urea is used as a reductant in the above embodiment, the present invention may be applied to a case in which a reductant other than urea is used. For instance, ammonia may be used as a reductant, and ammonia solution or the like may be injected.

A vehicle equipped with this engine 8 is further provided with an electronic control unit (ECU) 40. The electronic control unit 40 controls all devices required to operate the engine 8, including intake and exhaust valves and a fuel injection device, and various type of vehicle equipment, for instance. Furthermore, information from various sensors is transmitted to the electronic control unit 40 through a cable. The electronic control unit 40 is provided with an engine control unit 41 for controlling the engine 8 and the general operation of the vehicle, on the basis of the above information.

In the exhaust passage 4, as shown in FIG. 1, an ammonia detection part 'b' is disposed between the first catalyst body 13 and the second catalyst body 14, for obtaining information on the inflow amount of ammonia. Furthermore, a nitrogen oxide detection part 'c' for obtaining information on the discharge amount of nitrogen oxide and an O₂ sensor 'd' are disposed downstream the second catalyst body14 (in the vicinity of the outlet).

Furthermore, in the exhaust passage 4, a first temperature obtaining unit 'a' for obtaining the temperature of the first reduction catalyst part 11 is disposed, upstream the first catalyst body 13 (in the vicinity of the inlet). Furthermore, between the first catalyst body 13 and the second catalyst body 14, a second temperature obtaining unit 'e' for obtaining the temperature of the second reduction catalyst part 12 is disposed, upstream the second catalyst body 14 (in the vicinity of the inlet).

The electronic control unit 40 includes a reductant injection control unit 42 which controls the fuel injection amount and the intake amount supplied to the combustion chamber 1, or controls the amount or timing of reductant injection, on the basis of information on the inflow amount of ammonia obtained by the ammonia detection part 'b' and information on the discharge amount of the nitrogen oxide obtained by the nitrogen oxide detection part 'c'.

Furthermore, the reductant injection control unit 42 controls injection of the reductant by the first injector 20 and the second injector 22 on the basis of the temperature of the first reduction catalyst part 11 and the temperature of the second reduction catalyst part 12. The reductant injection control unit 42 controls the amount of ammonia produced on the upstream side of the first catalyst body 13 and on the upstream side of the second catalyst body 14 depending on the temperature of the first reduction catalyst part 11 and the temperature of the second reduction catalyst part 12, whereby it is possible to reduce the discharge amount of nitrogen oxide.

The first reduction catalyst part 11 includes an upstream arrangement part 15 including a urea selective catalyst part including a diesel particulate matter filter with a function of a urea selective catalytic reduction device applied thereto, and a downstream arrangement part 16 that functions as a urea selective catalytic reduction device alone without the function of a diesel particulate matter filter.

Herein, compared to the upstream arrangement part 15 including the diesel particulate matter filter function in the first reduction catalyst part 11, the downstream arrangement part 16 without the diesel particulate matter filter function and the upstream part 17, and the downstream part 18 of the second reduction catalyst part 12 tend to achieve a higher nitrogen oxide purification performance, under the same conditions regarding the temperature and the reductant. The reason for the above is that the ratio (mil/cell) of the carrier thickness of the cells constituting the diesel particulate matter filter to the gaps of the cells is greater than the ratio (mil/cell) of the carrier thickness of the cells constituting a normal urea selective catalytic reduction device to the gaps of the cells.

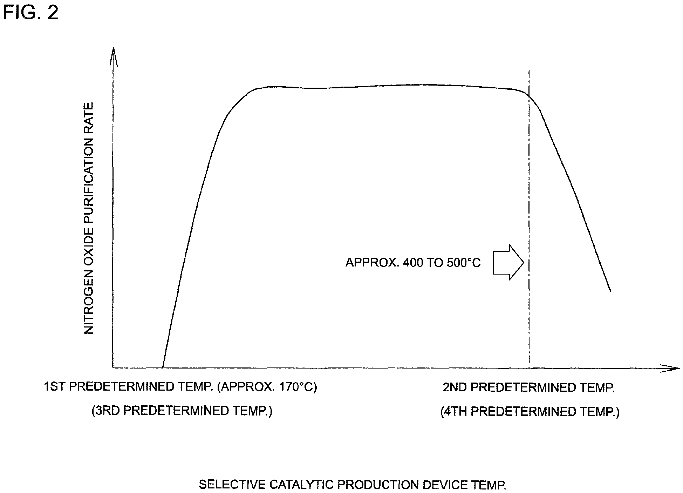

Furthermore, in an embodiment, the upstream part 17 and the downstream part 18 of the second reduction catalyst part 12 include catalysts of the same configuration, which have activation temperature characteristics shown in FIG. 2, for instance. Specifically, in the activation temperature characteristics of the catalysts, the minimum temperature at which a predetermined purification performance can be exerted or the temperature at which the purification performance starts to increase due to a temperature increase (corresponding to the first predetermined temperature, and the third predetermined temperature in FIG. 2; hereinafter, referred to as "lower limit temperature"), and the temperature at which the purification performance starts to decrease due to a temperature increase (corresponding to the second predetermined temperature, and the fourth predetermined temperature in FIG. 2; hereinafter, "upper limit temperature") are both the same. The range between the lower limit temperature and the upper limit temperature is the activation temperature range where the purification performance of the catalysts can be expected.

Herein, a combination of catalysts may be adopted such that the activation temperature characteristics (lower limit temperature, upper limit temperature, etc.; the same applies hereinafter) of the upstream part 17 is relatively higher than the activation temperature characteristics of the downstream part 18.

Furthermore, in the present embodiment, the downstream arrangement part 16 of the first reduction catalyst part 11 is provided with a catalyst having the same configuration so as to have the same activation temperature characteristics as the upstream part 17 and the downstream part 18 of the second reduction catalyst part 12. However, the activation temperature characteristics of the downstream arrangement part 16 of the first reduction catalyst part 11 may be higher than the activation temperature of the upstream part 17 of the second reduction catalyst part 12. Furthermore, similarly, the relationship between the upstream arrangement part 15 and the downstream arrangement part 16 of the first reduction catalyst part 11 may be such that, with regard to the function of the urea selective catalytic reduction device, the activation temperature characteristics of the upstream arrangement part 15 and the downstream arrangement part 16 are the same, or the activation temperature characteristics of the upstream arrangement part 15 are higher than the activation temperature characteristics of the downstream arrangement part 16.

The supply amount and supply time of the reductant for the plurality of catalyst parts are adjusted in response to the temperature conditions of the respective catalyst parts. Accordingly, on a catalyst part from which a predetermined purification performance cannot be expected, such as a catalyst part in an excessively high or low temperature state, a control is performed which avoids supply of unnecessary urea that does not contribute to purification of nitrogen oxide. Furthermore, on a catalyst part in a state from which a predetermined purification performance can be expected, a control is performed which supplies an appropriate amount of urea at an appropriately timing, to promote purification of nitrogen oxide.

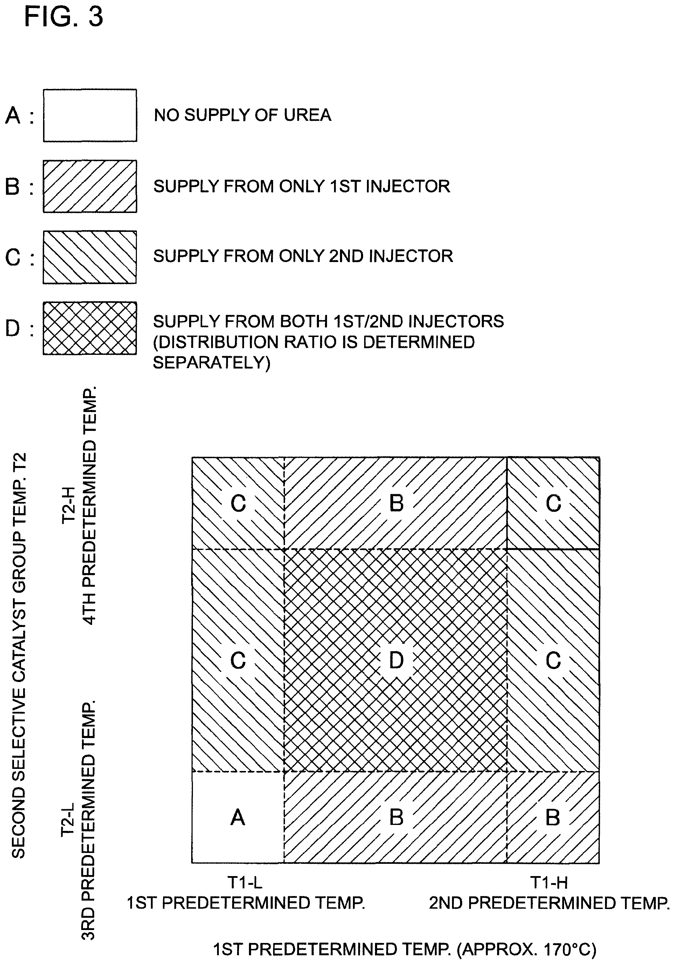

FIG. 3 shows an exemplary control using the above exhaust gas control device for an engine.

Herein, in a case where the temperature T1 of the first reduction catalyst part 11 is within the activation temperature range of the first reduction catalyst part 11, that is, in a case where T1 is not lower than the first predetermined temperature T1-L, which is the lower limit temperate, and less than the second predetermined temperature T1-H, which is the upper limit temperature, and the temperature T2 of the second reduction catalyst part 12 is within the activation temperature range of the second reduction catalyst part 12, that is, not lower than the third predetermined temperature T2-L, which is the lower limit temperature, and less than the fourth predetermined temperature T2-H, which is the upper limit temperature, a control is performed which injects the reductant with both of the first injector 20 and the second injector 22. This corresponds to the central region D shown in the graph of FIG. 3, and the nitrogen oxide purification performance can be enhanced by using two injectors to inject a greater amount of reductant.

At this time, the distribution ratio of the reductant between the first injector 20 and the second injector 22, that is, the ratio of the injection amount of the reductant by the first injector 20 to the injection amount of the reductant by the second injector 22 can be determined on the basis of the activation temperature characteristics of the first reduction catalyst part 11 and the second reduction catalyst part 12. For instance, the ratio of the injection amount of the reductant by the first injector 20 to the injection amount of the reductant by the second injector 22 may be the numeral ratio of the nitrogen oxide purification rate of the first reduction catalyst part 11 to that of the second reduction catalyst part 12 at the respective temperatures.

Herein, generally, compared to the first reduction catalyst part 11 proximate to the engine 8, the second reduction catalyst part 12 disposed downstream, or remote from the engine 8 is more likely to be in a low temperature state, relatively. Thus, in a high-load region with a high exhaust temperature in particular, it is more effective to make use of the second reduction catalyst part 12.

The right-top and right-center regions of the regions C in the graph of FIG. 3 will be described as an example. The right-top and right-center regions are applied to a case where the temperature T1 of the first reduction catalyst part 11 shown on x-axis is not lower than the second predetermined temperature T1-H, which is the upper limit temperature, and the temperature T2 of the second reduction catalyst part 12 is not lower than the third predetermined temperature T2-L, which is the lower limit temperature. At this time, the first reduction catalyst part 11 is out of the activation temperature range between the lower limit temperature and the upper limit temperature, toward the high-temperature side.

In this case, one may consider injecting urea solution from both of the first injector and the second injector to decrease the temperatures of the first reduction catalyst part and the second reduction catalyst part with vaporization heat of the injected urea solution. However, as a premise, both of the catalyst parts have a temperature greater than the upper limit temperature. Thus, the purification performance is low, and injecting urea solution from both injections is not efficient and the urea solution could be wasted. Thus, by injecting the reductant only with the second injector 22 corresponding to the second reduction catalyst part 12 in which the temperature tends to be relatively low due to its position on the downstream side, it is possible to reduce the temperature of the second reduction catalyst part which is likely to decrease in temperature, and the temperature is transitioned to the right-center region of the regions C shown in FIG. 3. Accordingly, it is possible to recover the efficiency of injection by the second injector quickly, and to recover the entire purification performance while forbidding inefficient injection by the first injector. Furthermore, in a case where the upstream first reduction catalyst part is a diesel particulate matter filter having the function of the urea selective catalytic reduction device, the first reduction catalyst part is often exposed to high temperature for filter regeneration. In this case, the temperature is less likely to decrease compared to the downstream catalyst, and thus it is more effective to cool the downstream catalyst alone proactively.

Furthermore, the same applies to the left-top and left-center regions of the regions C in the graph of FIG. 3. That is, when the temperature of the first reduction catalyst part 11 is lower than the first predetermined temperature T1-L, which is the lower limit temperature, and the temperature of the second reduction catalyst part 12 is not lower than the third predetermined temperature T2-L, which is the lower limit temperature. At this time, the first reduction catalyst part 11 is out of the activation temperature range between the lower limit temperature and the upper limit temperature, toward the low temperature side, and only the second injectors 22 corresponding to the second reduction catalyst part 12 injects the reductant.

Next, of the regions B shown in FIG. 3, the bottom-center and right-bottom regions apply to a case where the temperature T1 of the first reduction catalyst part 11 is not lower than the first predetermined temperature T1-L, which is the lower limit temperature, and the temperature T2 of the second reduction catalyst part 12 is lower than the third predetermined temperature T2-L, which is the lower limit temperature. At this time, the second reduction catalyst part 12 is out of the activation temperature range between the lower limit temperature and the upper limit temperature, toward the low-temperature side, and thus the first injector 20 corresponding to the first reduction catalyst part 11 having a relatively high temperature injects the reductant. Furthermore, of the regions B shown in FIG. 3, in a case where the bottom-center region and the right-bottom region are compared, the first injector injects a greater amount in the right-bottom region than in the bottom-center region. Accordingly, if the temperature is high, it is possible to reduce the temperature by injecting a somewhat greater amount to utilize the effect of vaporization heat.

Furthermore, of the regions B shown in FIG. 3, the top-center region applies to a case where the temperature T1 of the first reduction catalyst part 11 is not lower than the first predetermined temperature T1-L, which is the lower limit temperature of the first reduction catalyst part 11, and lower than the second predetermined temperature T1-H, which is the upper limit temperature, and the temperature T2 of the second reduction catalyst part 12 is not lower than the fourth predetermined temperature T2-H, which is the upper limit temperature. At this time, the second reduction catalyst part 12 is out of the activation temperature range between the lower limit temperature and the upper limit temperature, toward the high-temperature side, and thus the first injector 20 alone injects the reductant.

In the region A shown in FIG. 3, that is, a case where the temperature T1 of the first reduction catalyst part 11 is lower than the first predetermined temperature T1-L, which is the lower limit temperature of the first reduction catalyst part 11, and the temperature T2 of the second reduction catalyst part 12 is lower than the third predetermined temperature T2-L, which is the lower limit temperature, the first reduction catalyst part 11 and the second reduction catalyst part 12 are both out of the activation temperature range between the lower limit temperature and the upper limit temperature toward the low-temperature side, and neither injector injects the reductant.

Furthermore, while the first injector 20 and the second injector 22 inject the reductant in a direction toward the upstream end surface of the first mixer 30 and the second mixer 31, injection of the reductant may not necessarily be oriented toward the first mixer 30 and the second mixer 31, and may be oriented toward the inner surface of the exhaust passage 4, for instance.

Furthermore, in the above embodiment, the first injector 20 and the second injector 22 are disposed in the outer region of the curved portion of the exhaust passage 4, such that the reductant injection direction and the flow direction of exhaust gas are parallel to each other. However, the injection direction of the reductant and the flow direction of exhaust gas may intersect with each other. Furthermore, the injection direction of the reductant may face the flow direction of exhaust gas.

Furthermore, in the above embodiment, the first reduction catalyst part 11 includes an upstream arrangement part 15 including a urea selective catalyst part including a diesel particulate matter filter with a function of a urea selective catalytic reduction device applied thereto, and a downstream arrangement part 16 that functions as a urea selective catalytic reduction device alone without the function of a diesel particulate matter filter. However, one of the upstream arrangement part 15 or the downstream arrangement part 16 may be omitted. Alternatively, both of the upstream arrangement part 15 and the downstream arrangement part 16 may include the urea selection catalyst part 15a, or both of the upstream arrangement part 15 and the downstream arrangement part 16 may function as the urea selective catalytic reduction device alone.

Furthermore, while the second reduction catalyst part 12 includes two urea selective catalytic reduction devices, the upstream part 17 and the downstream part 18, one of the upstream part 17 or the downstream part 18 may be omitted.

Furthermore, in the above embodiment, both of the diesel oxidation catalyst device 10 being the upstream exhaust gas purification part and the first reduction catalyst part 11 are both proximate catalysts. However, the present invention can be also applied to a case in which both of the above are each provided as an underfloor catalyst disposed remote from the combustion chamber 1 of the engine 8 in an environment rarely exposed to relatively high-temperature exhaust gas.

In the above embodiment, purification of exhaust gas in a diesel engine has been described. However, the present invention can be applied not only to diesel engines but engines in general, which include a reduction catalyst body that purifies nitrogen oxide in exhaust gas with a reductant or a substance produced from the reductant, through injection of the reductant into exhaust gas.

## Claims

1. An exhaust gas purification device for an engine, comprising:
an exhaust passage (4) extending from a combustion chamber of an engine;
reductant injectors (20, 22) configured to inject a reductant into the exhaust passage;
a first reduction catalyst part (11) and a second reductant catalyst part (12) disposed in the exhaust passage and including a selective reduction catalyst, so as to purify nitrogen oxide in the exhaust gas with the reductant or a substance produced from the reductant, the second reduction catalyst part being disposed downstream the first reduction catalyst part;
a first temperature obtaining unit (a) for obtaining a temperature of the first reduction catalyst part; and
a second temperature obtaining unit (e) for obtaining a temperature of the second reduction catalyst part,
wherein the reductant injector includes a first injector (20) disposed upstream the first reduction catalyst part and a second injector (22) disposed between the first reduction catalyst part and the second reduction catalyst part, and
wherein the exhaust gas purification device further includes a reductant injection control unit (42) configured to control injection of the reductant by the first injector and the second injector on the basis of the temperature of the first reduction catalyst part and the temperature of the second reduction catalyst part.

2. The exhaust gas purification device for an engine according to claim 1,
wherein the first reduction catalyst part (11) includes a urea selection catalyst part (15a) which comprises a diesel particulate matter having a function of a urea selection catalyst reduction device applied thereto.

3. The exhaust gas purification device for an engine according to claim 1 or 2,
wherein the first reduction catalyst part (11) has an activation temperature range of not lower than a first predetermined temperature and lower than a second predetermined temperature, and the second reduction catalyst part (12) has an activation temperature range of not lower than a third predetermined temperature and lower than a fourth predetermined temperature, and
wherein the reductant injection control unit (42) is configured to forbid injection by the first injector (20) and inject the reductant with the second injector (22), if the temperature of the first reductant catalyst part is not lower than the second predetermined temperature and the temperature of the second reductant catalyst part is not lower than the fourth predetermined temperature.

4. The exhaust gas purification device for an engine according to claim 1 or 2,
wherein the first reduction catalyst part (11) has an activation temperature range of not lower than a first predetermined temperature and lower than a second predetermined temperature, and the second reduction catalyst part (12) has an activation temperature range of not lower than a third predetermined temperature and lower than a fourth predetermined temperature,
wherein the reductant injection control unit (42) is configured to forbid injection by the second injector (22) and inject the reductant with the first injector (20), if the temperature of the first reductant catalyst part is not lower than the first predetermined temperature and the temperature of the second reductant catalyst part is lower than the third predetermined temperature, and
wherein the first injector injects a greater amount of the reductant in a case where the temperature of the first reductant catalyst part is not lower than the second predetermined temperature than in a case where the temperature of the first reductant catalyst part is lower than the second predetermined temperature.

5. The exhaust gas purification device for an engine according to any one of claims 1 to 4,
wherein the reductant injection control unit (42) is configured to inject the reductant with the first injector (20) and the second injector (20), if the temperature of the first reductant catalyst part is in an activation temperature range of the first reductant catalyst part, which is not lower than a first predetermined temperature and lower than a second predetermined temperature, and the temperature of the second reduction catalyst part is in an activation temperature range of the second reduction catalyst part, which is not lower than a third predetermined temperature and lower than a fourth predetermined temperature.

6. The exhaust gas purification device for an engine according to claim 5,
wherein a ratio of an injection amount of the reductant injected by the first injector (20) to an injection amount of the reductant injected by the second injector (22) is a ratio of a nitrogen oxide purification rate of the first reduction catalyst to that of the second reduction catalyst part at respective temperatures.
